# EUROPEAN PATENT APPLICATION

(11) **EP 2 108 422 A1**
(43) Date of publication of application: **14.10.2009**
(21) Application number: 08710626.6
(22) Date of filing: 30.01.2008
(51) Int. Cl.: B01D 12/00, B01D 5/00, B09B 3/00, B09C 1/02, B09C 1/08, C02F 11/00, C02F 11/12

(54) **PROCESS FOR TREATMENT OF WATER-CONTAINING SUBSTANCE**

(30) Priority: 31.01.2007 JP 2007021089
(71) Applicant: Central Research Institute of Electric Power Industry, Chiyoda-ku Tokyo 1008126 (JP); Tsukishima Kikai Co., Ltd., Tokyo 104-0051 (JP)
(72) Inventor: KANDA, Hideki, Yokosuka-shi Kanagawa 240-0196 (JP); MAKINO, Hisao, Yokosuka-shi Kanagawa 240-0196 (JP); MORITA, Mayumi, Tokyo 104-0051 (JP); TAKEGAMI, Keizo, Tokyo 104-0051 (JP); YOSHIKOSHI, Akio, Tokyo 104-0051 (JP); TAKAHASHI, Masazumi, Tokyo 104-0051 (JP)
(74) Representative: Pugh, Robert Ian
(86) International application number: PCT/JP2008/051367
(87) International publication number: WO 2008/093706

(57) **Abstract**

It is an object of the present invention to provide means which achieves efficient treatment of a water-containing material and allow the material after the treatment to be recycled as a resource.

That is, the present invention provides a method for treatment of the water-containing material, comprising: (A) a step bringing a liquid of a substance that is in the gaseous state under normal temperature and pressure conditions into contact with a water-containing material;
(B) a step obtaining a liquid layer through solid-liquid separation from a treated product resulting from the step (A);
(C) a step vaporizing and extracting at least a portion of the substance that is in the gaseous state under normal temperature and pressure conditions as gas from the liquid layer obtained from the step (B); and
(D) a step collecting a lower layer resulting from liquid-liquid separation conducting on a liquid layer resulting from the step (C). Further, the present invention provides a apparatus for treatment of the water-containing material.

## Description

### TECHNICAL FIELD

The present invention relates to a method for treatment of a water-containing material, and more particularly relates to a treatment method in which a water-containing material can be efficiently treated and recycled by utilizing the liquefaction-vaporization phenomenon of a gas of a substance that is in the gaseous state under normal temperature and pressure conditions. Further, the present invention relates to a system for treatment using the treatment method.

### BACKGROUND ART

Conventionally, a variety of water-containing materials have been known, and various methods for treatment of the water-containing materials have been developed in the light of recycle and quality enhancement.
For example, in the treatment method for sewage sludge generated from a sewage system, it has been common to incinerate the sewage sludge and use the incinerated ash for reclamation. However, before the incineration, it is necessary that a pretreatment appropriately combining a concentration treatment, a dehydration treatment and a drying treatment is performed to remove a large quantity of an aqueous component contained in the sewage sludge, and such treatment has been difficult to implement. Also, a large amount of the sewage sludge is discharged; on the other hand, there is a limit to assuring areas to be reclaimed. Thus, a technology for recycle has also been desired.
Meanwhile, in the method for reforming in oil (e.g., see JP 2000-290673 A [Patent Document 1]) as one of dehydration techniques, coal is supposed as a water-containing solid, and the water in the water-containing solid is evaporated by treating the water-containing solid which has been made into slurry in the oil with heat at 150°C or above. The liquid oil that scarcely evaporates at the operation temperature is used as a heating medium, thereby it was achieved to evaporate selectively the water alone. Thus, water vapor is never diluted and the density at the evaporation latent heat which water vapor has is not reduced. Therefore, it seems to be possible in the method for reforming in oil to recover efficiently the evaporation latent heat that the water vapor has. Among others, concerning the dehydration of the coal, it is believed that the energy required in the method for reforming in oil is the smallest in existing techniques. However, centrifugation and heating operation at temperature higher than 150°C are required in order to separate the coal from the oil whose boiling point is higher than that of water (deoiling) in the reform method in oil. Thus, energy consumed in the deoiling step is higher than energy consumed in the dehydration step. Accordingly, this method has not been carried out yet in full-scale commercial operation.

Patent Document 1: JP 2000-290673 A

### DISCLOSURE OF INVENTION

### PROBLEM TO BE SOLVED BY THE INVENTION

It is an object of the present invention to provide means for efficiently treating a water-containing material and making it possible to recycle the treated-material as a resource after the treatment.

### MEANS FOR SOLVING PROBLEM

As a result of an extensive study to accomplish the aforementioned object, the present inventors focused on that a substance that is in the gaseous state under normal temperature and pressure conditions can be easily vaporized through converting from liquid to gas by its nature without setting a harsh condition. As a result of trials and errors, the present inventors have found out that: various components in sewage sludge can be extracted and separated by allowing the aforementioned substance to act on the sewage sludge over multiple steps; each of the separated components is composed of a single constituent, which can be utilized as a resource; further, this method is widely applicable to not only the sewage sludge but also various materials such as coal as long as the material is a water-containing material. Finally, the present inventors have completed the invention based on these findings.

The present invention provides the following:
[1] A method for treatment of a water-containing material comprising:
   (A) a step bringing a liquid of a substance that is in the gaseous state under normal temperature and pressure conditions into contact with a water-containing material;
   (B) a step obtaining a liquid layer through solid-liquid separation from a treated product resulting from the step (A);
   (C) a step vaporizing and extracting at least a portion of the substance that is in the gaseous state under normal temperature and pressure conditions as a gas from the liquid layer obtained from the step (B); and
   (D) a step collecting a lower layer resulting from liquid-liquid separation conducting on a liquid layer resulting from the step (C).
[2] The method for treatment according to the [1], wherein the substance that is in the gaseous state under normal temperature and pressure conditions is a substance that is in the gaseous state at 25°C at 1 atmosphere.
[3] The method for treatment according to the [1] or the [2], wherein the substance that is in a gaseous state under normal temperature and pressure conditions is one or a mixture of two more selected from dimethyl ether, ethylmethyl ether, formaldehyde, ketene, acetaldehyde, butane and propane.
[4] The method for treatment according to any one of the [1] to the [3], further comprising: (E) a step vaporizing and extracting at least a portion of the substance that is in the gaseous state under normal temperature and pressure conditions as a gas from an upper layer resulting from the step (D).
[5] The method for treatment according to any one of the [1] to the [3], further comprising: (F) a step recovering a gas of the substance that is in the gaseous state under normal temperature and pressure conditions resulting from the step (C) of vaporizing and separating, and liquefying the gas to yield a liquefied substance.
[6] The method for treatment according to the [4], further comprising: (F') a step recovering a gas of the substance that is in the gaseous state under normal temperature and pressure conditions resulting from the step (c) and/or the step (E) of vaporizing and separating, and liquefying the gas to yield a liquefied substance.
[7] The method for treatment according to any one of the [1] to the [6], in the step (A), wherein the liquid of the substance that is in the gaseous state under normal temperature and pressure conditions is brought into contact with the water-containing material at a weight ratio of 233:1 to 233:50.
[8] The method for treatment according to any one of the [1] to the [7], wherein stirring is performed at 400 rpm to 1,000 rpm in the step (A).
[9] A apparatus for treatment of a water-containing material, comprising:
   a contact tank that brings a liquid that is a substance that is in the gaseous state under normal temperature and pressure conditions into contact with a water-containing material;
   a solid-liquid separation tank that conducts solid-liquid separation to a mixture resulting from bringing the liquid of the substance into contact with the water-containing material in the contact tank;
   a concentrator that extracts at least a portion of the substance that is in the gaseous state under normal temperature and pressure conditions from a liquid layer resulting from the separation as a gas; and
   a liquid-liquid separator that conducts liquid-liquid separation on a liquid layer resulting from the solid-liquid separation.
[10] The apparatus for treatment according to the [9], further comprising: an evaporator that extracts at least a portion of the substance that is in the gaseous state under normal temperature and pressure conditions from a separated liquid layer in the liquid-liquid separator as a gas.
[11] The apparatus for treatment according to the [9] or the [10], further comprising: a compressor that pressurizes a gas of the substance that is in the gaseous state under normal temperature and pressure conditions.

### EFFECT OF THE INVENTION

The present invention provides a method in which the water-containing material can be treated efficiently and which makes it possible to recycle as a resource after the treatment. In particular, according to the present invention, sludge components in the sewage sludge can be treated efficiently under mild conditions by using a substance that is in the gaseous state under normal temperature and pressure conditions. After the treatment, the clean water can be obtained. The obtained water, if necessary which is further purified, can be recycled for various purposes such as drinking water, industrial water or agricultural water. The dehydrated sludge after the treatment is easily transported because an aqueous component has been removed to reduce its weight. In addition, the pretreatment before incinerating-process for disposal can be omitted or simplified; thus, if it is disposed, labor and cost for such pretreatment can be reduced. Moreover, the method is preferable in terms of resource preservation. The present invention can be applied uniformly to a variety of water-containing materials having a different range of water content. For example, when the present invention is applied to the dehydration of the coal, the coal with high quality can be obtained efficiently.

### BRIEF DESCRIPTION OF DRAWINGS

FIG.1 illustrates an outline of Dehydration Apparatus 1 which is an example of the apparatus of the present invention.
FIG. 2 illustrates an outline of Dehydration Apparatus 2 which is an example of the apparatus of the present invention.
FIG. 3 illustrates an outline of Dehydration Apparatus 3 which is an example of the apparatus of the present invention.
FIG. 4 schematically illustrates an specific example of the apparatus of the present invention.

### EXPLANATIONS OF LETTERS OR NUMERALS

11 Contact Tank
12 Solid-Liquid Separation Tank
13 Concentrator
14 Liquid-Liquid Separator
15 Evaporator
16, 16A, 16B, 16C Compressor
17A, 17B, 17C, Heat Exchangers
18 Pressure Reducing Valve
21 Buffer tank
22 Squeezing Machine
23 Dimethyl-ether(DME) Removing Machine
31 Liquid DME Supply Unit
32 Liquid DME
33 Sewage Sludge Supply Unit
34 Sewage Sludge
35 Treated Product
36 Solid Layer
37 Liquid Layer
38 Gas
39 Liquid
40 Lower Layer
41 Upper Layer
42 Gas
43 Liquid
44 Liquid DME

### BEST MODES FOR CARRYING OUT THE INVENTION

The treatment method for the water-containing material of the present invention is characterized by including the following steps (A), (B), (C) and (D).

In a contact step (A), a liquid of a substance that is in the gaseous state under normal temperature and pressure conditions is brought into contact with a water-containing material.

The substance that is in the gaseous state under normal temperature and pressure conditions means a substance which is present in the gaseous state at least under arbitrary temperature and pressure conditions within normal temperature and pressure conditions. That is, if a substance is turned in the gaseous state under a condition of temperature A and pressure B which falls within the range of the normal temperatures and pressures, but the substance does not turn in the gaseous state at temperatures other than the temperature A and at pressures other than the pressure B which fall within the normal temperature and pressure conditions, such the substance may be employed to the treatment of the present invention.

Here, the normal temperature means a temperature close to an outside air temperature, and means generally - 10°C to 50°C and particularly 0°C to 40°C. The normal pressure means a pressure close to an outside air pressure, and generally means the range around 1 atmosphere.

As the substance that is in the gaseous state under normal temperature and pressure conditions, specifically, a substance that is in the gaseous state under the condition of 25°C and 1 atmosphere and a substance that is in the gaseous state under the condition of 0°C and 1 atmosphere are preferable. In particular, the most preferable one is a substance that is in the gaseous state under the condition of 25°C and 1 atmosphere and is also in the gaseous state under the condition of 0°C and 1 atmosphere.

As the substance that is in the gaseous state under normal temperature and pressure conditions, it is preferable that the boiling point of the substance is around the normal temperature or below to make the dehydration possible with a less required energy. In particular, the preferable boiling point is 25°C or below, the more preferable one is 10°C or below, and the furthermore preferable one is -5°C or below. If the boiling point is higher than the normal temperature, an energy source with high temperature is required for vaporizing the substance in the step (C) described in later; as a result, it is estimated that the energy required for the dehydration increases. Therefore, the substance with such the boiling point is not preferable.

The substance that is in the gaseous state under normal temperature and pressure conditions may include, for example, dimethyl ether, ethylmethyl ether, formaldehyde, ketene, acetaldehyde, butane and propane. These may be used alone or in mixture of two or more. Among them, dimethyl ether alone or a mixture of dimethyl ether with the other substance described in the above examples are preferable.

Dimethyl ether has the boiling point of -24.8°C at 1 atmosphere, and it is in the gaseous state at -10°C to 50°C under the atmospheric pressure. Methods and equipment for producing dimethyl ether with high efficiency are disclosed in JP Hei-11-130714 A, JP Hei-10-195009 A, JP Hei-10-195008 A, JP Hei-10-182527 A to JP Hei-10-182535 A, JP Hei-09-309850 A to JP Hei-09-309852 A, JP Hei-09-286754 A, JP Hei-09-173863 A, JP Hei-09-173848 A and JP Hei-09-173845 A, and dimethyl ether can be easily obtained according to the technology disclosed in them.

In the present invention, the treatment target is a water-containing material. The water-containing material means a material which contains an aqueous component. The "aqueous component" means water or an aqueous solution regardless of its composition and origin. For example, water, blood, a body fluid and sewage water may be included. "Containing" means that the aforementioned aqueous component is contained in some kind of material. The some kind of material, whose size and component are not particularly limited, preferably makes up a form of a solid or slurry as the water-containing material. An existence mode of the aqueous component in the water-containing material is not particularly limited. The aqueous component may be enveloped inside the material; may exist on the outer surface; may exist between solid particles; or in some cases, may exist in fine pores inside the solid particle. A percentage of water content in the water-containing material is not particularly limited, and is typically 20% to 98% by weight and preferably 35% to 85% by weight. These water-containing materials may include such a material which has been previously treated by other dehydration-treatment, as long as the material contains the aqueous component.

As an example of the water-containing material, sewage sludge may be included. Here, the sewage sludge means sludge discharged from a sewage-disposal plant that treats the water discharge effluent such as household effluent and industrial effluent, and also includes a dehydrated cake. The dehydrated cake means a matter of solid obtained by dehydrating sewage sludge. To obtain the dehydrated cake from the sewage sludge, for example, filtration concentration, solid-liquid separation or squeeze by a device which is equipped with a filter, a screw, a centrifuge or a roll are available. The dehydrated cake used in the present invention may be obtained by appropriately selecting those methods, and an resultant is preferable obtained by the combination of the filtration concentration and the squeeze. An example of the devices for producing the dehydrated cake may include a belt press, a centrifugal dehydrator and a screw press. An amount of the aqueous component in the sewage sludge (or in the dehydrated cake) generally exhibits 75% to 85% by weight (about 78% by weight). Other examples of the water-containing material may include coal, polymer absorbents (such as used paper diapers and used sanitary napkins), organisms (such as weeds, bouquets, and jelly fish), biomass materials (such as wood chips, leftover meals, kitchen refuses, and other so-called wastes) and soils. Among them, the coal with high quality may be obtained efficiently by applying the present invention to the coal. The present invention may be applied to many states of coal: a coal which is just the state directly after mining; or a coal which has been already treated after mining with some dehydration treatment such as the method of reforming in-oil [see JP 2000-290673 A] or the method for dehydration using a dry inert gas [see JP Hei-10-338653 A]. The water content in the coal is typically 20% to 80% by weight and preferably 35% to 67% by weight. Types of the coal may include sub-bituminous coal, brown coal lignite, and peat coal.

In the contact step (A), the liquid of the substance that is in the gaseous state under normal temperature and pressure conditions is brought into contact with the water-containing material. The method of contact is not particularly limited, and the contact may be performed by accommodating the liquid of the substance that is in the gaseous state under normal temperature and pressure conditions in a container. A weight ratio of the water-containing material and the liquid may be appropriately determined. For example, when the water-containing material is the sewage sludge, a preferable minimum amount of the liquid is an amount required to prepare a liquid substance which highly contains the aqueous component after dissolving the aqueous component (typically around 78% by weight) in the sewage sludge thereto. That is, it is preferable to contact the liquid of the substance that is in the gaseous state under normal temperature and pressure conditions to the water-containing material at weight ratio of 233:1 to 233:50. For example, supposing that dimethyl ether (DME) is used as the substance that is in the gaseous state under normal temperature and pressure conditions, since the saturated solubility of the water to the liquid DME at 20°C is 7.2% by weight, the amounts may be appropriately determined so that the concentration of the sewage sludge becomes 9% by weight or more through calculating based on the above water content in the sewage sludge. An upper limit of the concentration of the sewage sludge based on the dimethyl ether is not particularly limited, but when the amount of the sewage sludge is too small, the contact by the dimethyl ether becomes sometimes difficult. Thus, the upper limit may be 20% by weight or less.

To bring the liquid of the substance that is in the gaseous state under normal temperature and pressure conditions into contact with the water-containing material, it is necessary to keep the substance in a liquid state. The method for keeping in a liquid state is not particularly limited, but it is desirable to keep the liquid substance at saturated vapor pressure. In particular, it is desirable that a temperature of the step (A) is appropriately set in the range of -10°C to 50°C; and above all, it is preferably set in the range of 0°C to 40°C. A contact time period (dehydration time period) depends on the conditions such as types of contact, amounts of the water-containing material, the liquid substance, and the condition of a contact method; therefore, it is difficult to be defined in a general way. However, the time period may be appropriately determined such that the aqueous component in the water-containing material is sufficiently dissolved in the liquid substance.

The conditions other than the temperature and the pressure, such as a contact method of the liquid of the substance that is in the gaseous state under normal temperature and pressure conditions with the water-containing material, a contact amount and the contact time period of the liquid substance, may be determined appropriately so that the aqueous component in the water-containing material is sufficiently dissolved in the liquid substance. As to the contact method, any method applied to the ordinary dehydration-such as immersing the water-containing material in the liquid substance, and passing the liquid substance through the water-containing material-may be employed. A countercurrent contact may be combined appropriately with other contact method; for example, after the countercurrent contact, the water-containing material is immersed in the liquefied substance, and then the countercurrent contact is performed again. In particular, in terms of enhancing a contact efficiency, it is desirable that the contact is performed while a part of the water-containing material is being dissolved into the liquid of the aforementioned substance. As to means for dissolving, stirring or fragmentation of the water-containing material may be included.

stirring conditions is not particularly limited as long as the water-containing material is sufficiently dissolved in the liquid substance. Supposing that the water-containing material is the sewage sludge as an example, a rotation frequency may be determined depending on the size of a stirrer, and may be normally 400 rpm to 1,000 rpm, preferably 600 rpm to 800 rpm, and more preferably 600 rpm to 700 rpm. A stirring time period may also be determined depending on the size of the stirrer, and may be normally 1 to 10 minutes, preferably 3 to 8 minutes and more preferably 4 to 6 minutes.

Conditions for fragmentation of the water-containing material is not particularly limited, and in the case of the sewage sludge, the condition may be determined appropriately so that the size after fragmentation is 1 mm to 1 cm in minor axis. A shape of fragmented pieces may include a spherical shape and a noodle shape in terms of easiness of the fragmentation. A size of the pieces need not be constant. A machine for fragmentation may include an extruder and an extruding machine.
Among the aforementioned treatment, the stirring treatment is preferable because the solubilization and the contact may be carried out simultaneously.

As described above, when the water-containing material is the sewage sludge, in the step (A) the liquid of the substance that is in the gaseous state under normal temperature and pressure conditions is brought into contact with the water-containing material; thereby, it is achieved to dissolve the liquid component contained in the sewage sludge-mainly such as water and oil-into the liquid substance, and facilitate separation of the components other than the liquid component. Thus, it is speculated that the step (A) facilitates the solid-liquid separation in the step (B) described later.

In the solid-liquid separation step (B), solid-liquid separation is conducted, obtaining a liquid layer from a treated product resulting from the step (A).
The means for the solid-liquid separation may include formation of two layers by still standing and fractionation by membrane treatment. Between them, the formation of two layers by still standing is preferable. A time period of the still standing may be obtained from a sedimentation rate of sludge in the case of the sewage sludge, and the sludge is typically precipitated at 1 mm/s to 2 mm/s. The time period may also be determined in consideration of a sedimentation depth required for the separation. A method for solid-liquid separation is not particularly limited, and the liquid layer may be removed by aspirating by using a pump attached to a container or an independent pump from the container. The step (B) may also be repeated twice or more.

Conditions other than the aforementioned time period, for example, temperature and pressure conditions, may be employed so that the solid-liquid separation efficiently performs. In particular, the conditions aforementioned on the step (A) under which the substance that is in the gaseous state under normal temperature and pressure conditions can be kept in the liquid state is preferable. In particular, it is preferable that the conditions are the same as the conditions employed in the step (A).

In this way, it is speculated that: a phenomenon of solubilization between the liquid component contained in the water-containing material and the liquid of the substance that is in the gaseous state under normal temperature and pressure conditions, which occurs in the step (A), proceeds further in the step (B), turning the dissolved components into a liquid layer; as a result, it is achieved to be separated from a solid layer mainly composed of components (such as gels and solids) other than the liquid components in the water-material.

In the vaporization and extraction step (C), at least a portion of the substance that is in the gaseous state under normal temperature and pressure conditions is vaporized and extracted from the liquid layer obtained in the step (B) (vaporization and extraction).
The substance that is in the gaseous state under normal temperature and pressure conditions may be vaporized by raising temperature and/or pressure to higher conditions than those of the step (A).

In the case of raising the temperature, it is preferable to raise temperature to the point that exceeds the boiling point of the substance that is in the gaseous state under normal temperature and pressure conditions. In the present invention, since the substance that is in the gaseous state under normal temperature and pressure conditions is employed, the substance may be vaporized at a temperature close to a normal temperature such as the outside air temperature. That is, it is possible to vaporize by only recovering a temperature from the cooled state in the steps (A) and (B) to a normal temperature state rather than heating. The temperature condition for the vaporization depends on a type of the liquid substance and the pressure condition, conditions such as normal temperatures and the temperature condition between -10 °C to 50°C are preferable, and particularly the temperature condition between 0°C to 40°C is preferable. In the step (C), if reducing pressure, the pressure condition is lower than the saturated vapor pressure and may be determined appropriately depending on the temperature.

In vaporization and extraction of the step (C), it is sufficient to extract at least a portion of the substance that is in the gaseous state under normal temperature and pressure conditions. Although all of the substance may be extracted, it is preferable to extract such that some amount of the substance is remained. Thereby, a liquid-liquid separation in the subsequent step (D) can be performed efficiently. For example, it is preferable that the substance that is in the gaseous state under normal temperature and pressure conditions is remained at 76% to 89% by weight, preferably 80% to 85% by weight, or particularly about 82% by weight in the liquid layer after completing the treatment of the step (C).

As described above, in the step (C), the gas of the substance that is in the gaseous state under normal temperature and pressure conditions is separated from the liquid layer; thereby, it is achieved to facilitate the separation of the step (D) described later.

In the liquid-liquid separation step (D), liquid-liquid separation is conducted on the liquid layer resulting from the step (C) to collect a lower layer.
Conditions for the liquid-liquid separation are not particularly limited, and separation by still standing may be employed. When the lower layer is collected, it is desirable to collect so that the lower layer is not mixed with the upper layer-the layer composed of the liquid of the substance that is in the gaseous state under normal temperature and pressure conditions and the liquid component in the water-containing material. Therefore, it is preferable to leave some portion of the lower layer at the boundary to the upper layer. Depending on an aspiration rate and a diameter of the aspiration tube, it is preferable such that a depth of the lower layer is 50 cm to 2 m.

As described above, in the step (D), it is possible to remove the layer (the upper layer) abundantly containing the liquid component in the water-containing material which is dissolved in the liquid of the substance that is in the gaseous state under normal temperature and pressure conditions, which is remained in the liquid layer obtained in the step (C). Thus, the layer (lower layer) that is to be a discharge water can be collected. The lower layer obtained in this way may be recycled as drinking water, industrial water and agricultural water by treating further treatment if necessary.
The gas of the substance that is in the gaseous state under normal temperature and pressure conditions is dissolved in the liquid layer resulting from the step (c) of the vaporization and extraction. Thus, this liquid layer can not be recycled because its environmental load is large, and moreover a loss amount of the substance is increased. Therefore, the gas of the substance dissolved in the liquid layer resulting from the step (c) is recovered to minimize the environmental load and the loss amount of the substance.

As described above, in the dehydration method of the present invention, the aqueous component can be removed from the water-containing material to obtain a dehydrated product by the above steps (A) to (D), and moreover the following vaporization and extraction step (E) and/or a liquefaction step (F) may also be included.

In the vaporization and extraction step (E), at least a portion of the substance that is in the gaseous state under normal temperature and pressure conditions is extracted as gas from the upper layer resulting from the step (D). By carrying out the step (E), it is possible to collect a discharge water abundantly containing the liquid component in the water-containing material and further facilitate a resource recycle of the substance that is in the gaseous state under normal temperature and pressure conditions.

In the liquefaction step (F) or (F'), the gas of the substance that is in the gaseous state under normal temperature and pressure conditions, which has been vaporized and separated in the step (C) and/or the step (E), is recovered. Then, the gas is liquefied, yielding a liquid substance.

The meaning of "liquefaction" is that the gas of the substance that is in the gaseous state under normal temperature and pressure conditions is converted to the liquid state. The liquefaction of the substance that is in the gaseous state under normal temperature and pressure conditions may be performed by pressurization and/or cooling, that is, the pressurization or the cooling, or the combination of the pressurization and the cooling. As to specific conditions, advantageous conditions may be selected appropriately in consideration of the standard boiling point of the substance to be used. In particular when cooling is employed, it is preferable that a cooling temperature is lower than the standard boiling point. Also from a viewpoint of performing simple dehydration, it is preferable to set in the range of the normal temperature, that is, the outside air temperature such as the range of - 10°C to 50°C and particularly 0°C to 40°C.

As an example, a substance having the boiling point of 0°C at 1 atmosphere as the substance that is in the gaseous state under normal temperature and pressure conditions is preferably liquefied by cooling at 0°C or below. Further, to combine pressurization and cooling is more preferable. Because if the liquefaction is performed only by cooling without the pressurization, the temperature of the liquefying substance becomes 0°C or below and the dehydration may become possibly impossible.

In the case of using substances having a boiling point higher than 0°C at 1 atmosphere, it is preferable to liquefy by cooling at a temperature equal to or higher than the boiling point. This is because, if the temperature is equal to or lower than their standard boiling point, a saturated vapor pressure of the substance becomes lower than 1 atmosphere, as the result, an internal pressure of a machine for liquefaction would be lower than 1 atmosphere, and thus, cost for producing the machine is increased and handling of the machine becomes difficult.

It is difficult to generalize a pressurization condition, but it is preferable to set so that a boiling point under the pressurization falls in a range of the normal temperature, that is, the outside air temperature, for example, the range of -10°C to 50°C and particularly 0°C to 40°C. When the pressurization is combined with the cooling, conditions may be determined depending on a cooling temperature.

When the water-containing material is sewage sludge, components other than the liquid component in the sewage sludge separated from the liquid layer obtained in the step (B) (such as inorganic components or organic solids typified by food residues, microbial cells and debris thereof), the solid layer component separated in the step (C), and the lower layer component resulting form the step (D) may be purified and treated to make reusable forms by removing the substance that is in the gaseous state under normal temperature and pressure conditions and the other elements. For example, a component separated from the liquid layer in the step (B) is swelled with the liquid of the substance that is in the gaseous state under normal temperature and pressure conditions; thus, a ratio of the liquid is reduced by squeeze, and further, the substance may be removed as gas, yielding a dehydrated sludge.

The treatment method of the present invention described in the above may be performed efficiently by the following apparatus for treatment of the water-containing material.
That is, the treatment apparatus for the water-containing material of the present invention is at least equipped with a contact tank, a solid-liquid separation tank, a concentrator and a liquid-liquid separator as described in the following.

The contact tank is an unit in which the liquid of the substance that is in the gaseous state under normal temperature and pressure conditions is brought into contact with the water-containing material, which is a means for performing the contact step (A) in the treatment method of the present invention.
The solid-liquid separation tank is an unit in which a mixture of the liquid of the aforementioned substance and the water-containing material resulting from contact in the contact tank is separated into the liquid and the solid, and which is a means for performing the solid-liquid separation step (B) in the treatment method of the present invention.

Each of the contact tank and the solid-liquid separation tank may be normally achieved as a water tank that is appropriately equipped with control means such as a heat exchanger in order to keep the substance that is in the gaseous state under normal temperature and pressure conditions in the liquid state. Each of them may be independently present, or two or more of them may be provided as the common water tank.

The concentrator is an unit in which at least a portion of the liquid of the substance that is in the gaseous state under normal temperature and pressure conditions is extracted from the liquid layer after the separation, and which is a means for performing the vaporization and extraction step (C) in the treatment method of the present invention described above. Normally, this may be achieved as a water tank that is appropriately equipped with a control means such as a heat exchanger for vaporizing the substance that is in the gaseous state under normal temperature and pressure conditions.

The liquid-liquid separator is an unit in which liquid-liquid separation is conducted on the liquid layer resulting from the solid-liquid separation, and which is a means for performing the liquid-liquid separation step (D) in the treatment method of the present invention described in the above. The liquid-liquid separator may be normally achieved as a water tank that is appropriately equipped with control means in order to keep the substance that is in the gaseous state under normal temperature and pressure conditions in the iquid state.

The treatment apparatus of the present invention may comprise an evaporator that extracts a gas which is at least a portion of the substance that is in the gaseous state under normal temperature and pressure conditions in the liquid layer obtained from the liquid-liquid separator. The evaporator is an unit to perform the step (E) in the treatment method of the present invention described above, and normally it may be achieved as a water tank that is appropriately equipped with control means for temperature and the pressure conditions such as a heat exchanger in order to vaporize the substance that is in the gaseous state under normal temperature and pressure conditions.

The treatment apparatus of the present invention may further comprise a compressor which pressurizes the gas of the substance that is in the gaseous state under normal temperature and pressure conditions. The compressor is an unit to perform the step (F) or (F') in the treatment method of the present invention described above. That is, this is for recovering the gas of the substance vaporized in the steps (C) and (E) and liquefying the gas of the substance to make it the liquid again. For example, when dimethyl ether is used as the substance that is in the gaseous state under normal temperature and pressure conditions, it is necessary to operate under a pressurization condition in order to obtain a liquid form-dimethyl ether at the normal temperature. Therefore, the compressor is preferably connected to a concentrator and an evaporator. The number of the compressors is not particularly limited. One compressor may be connected to both the solid-liquid separator and the evaporator, or two compressors may be connected to each one.

In the treatment apparatus of the present invention, the contact tank, the solid-liquid separation tank, the concentrator, the liquid-liquid separator, and if necessary the evaporator may be provided to be linked sequentially in this order if necessary with piping having a pump.
If necessary, the treatment apparatus of the present invention may comprise a buffer tank which houses the substance that is in the gaseous state under normal temperature and pressure conditions so as to be supplied into the apparatus, a squeezing machine which squeezes the lower layer from the solid-liquid separation tank, and a removing machine which removes the substance that is in the gaseous state under normal temperature and pressure conditions resulting from the treated product from the squeezing machine.

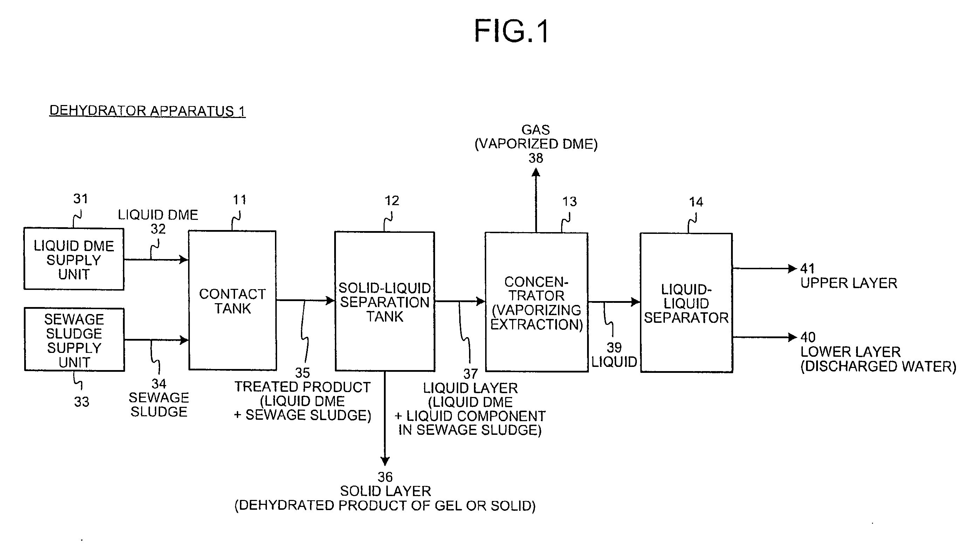

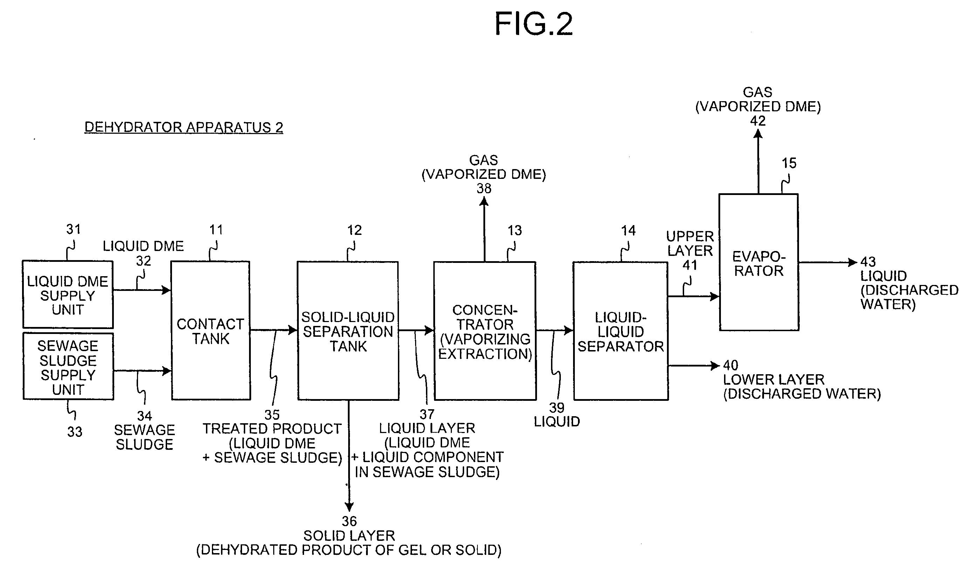

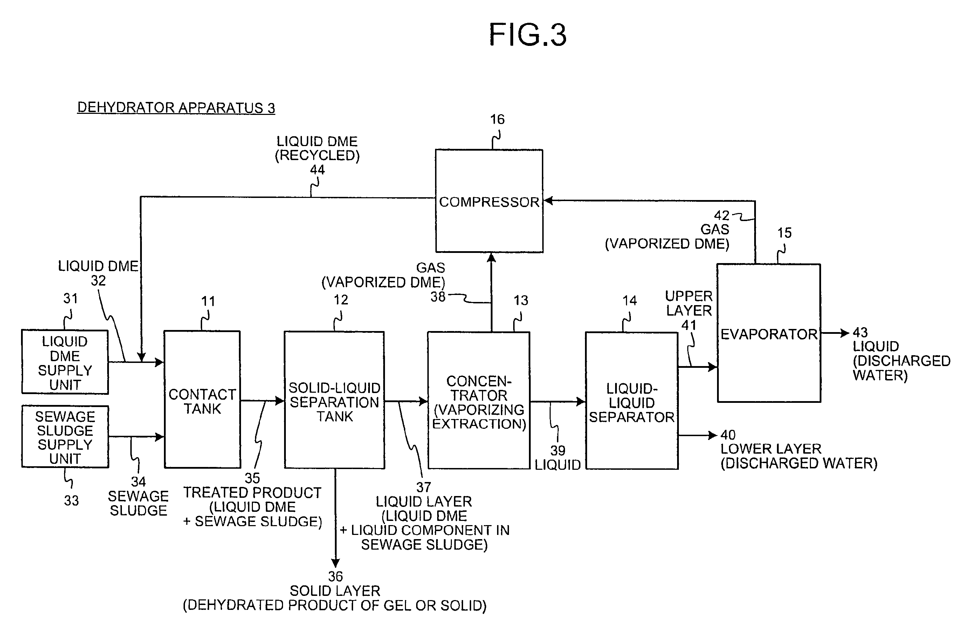

The component of the treatment apparatus of the present invention, and process of the dehydration treatment using this apparatus is explained with reference to Figures 1 to 3. Figures 1 to 3 are views conceptually showing dehydration apparatus 1 to 3 as the examples of the treatment apparatus of the present invention. Each unit which makes up the treatment apparatus in Figures 1 to 3 has a common numeral. Hereinafter, the dehydration apparatus 1 in FIG. 1 is explained, subsequently only different points in FIG. 2 from those in FIG. 1 are explained, and further different points in FIG. 3 from those in Figures 1 and 2 are explained.

The dehydration apparatus in FIG. 1 comprises: the contact tank 11 in which liquid dimethyl ether (liquid DME) that is an example of the substance that is in the gaseous state under normal temperature and pressure conditions is brought into contact with sewage sludge that is an example of the water-containing material; the solid-liquid separation tank 12 which conducts solid-liquid separation on a mixture of the liquid DME and the water-containing material obtained from the contact tank 11; the concentrator 13 in which at least a portion of the substance that is in the gaseous state under normal temperature and pressure conditions is extracted as gas from the liquid layer obtained from the separation; and the liquid-liquid separator 14 which conducts liquid-liquid separation on the liquid layer after the solid-liquid separation.

In the dehydration apparatus 1 shown in FIG. 1, the liquid DME 32 and the sewage sludge 34 are supplied from the liquid DME supply unit 31 and the sewage sludge supply unit 33, respectively to the contact tank 11. The mixture 35(treated product) of the liquid DME and the sewage sludge contacted in the contact tank 11 is transferred into the solid-liquid separation tank 12, and separated into the solid layer 36(dehydrated substance composed mainly of gels and solids) and the liquid layer 37(a liquid component from the liquid DME and the sewage sludge). The solid layer 36 is obtained as the final treated product. The liquid layer 37 is sent to the concentrator 13, and is separated into the gas 38 (mainly vaporized DME) and the liquid 39 by the vaporizing and extracting treatment at the concentrator 13. The liquid 39 is sent to the liquid-liquid separator 14, and separated into the lower-layer 40 and the upper layer 41 by the liquid-liquid separation treatment. The lower layer 40 is obtained as discharge water.

Compared with the dehydration apparatus 1, the dehydration apparatus 2 in FIG. 2 is different from the dehydration apparatus 1 in that the dehydration system 2 is further provided with the evaporator 15. The upper layer 41 separated in the liquid-liquid separator 14 is supplied to the evaporator 15, the gas 42(vaporized DME) is evaporated and the liquid 43 is obtained as discharge water.

Compared with the dehydration apparatus 2, the dehydration apparatus 3 in FIG. 3 is different from the dehydration apparatus 2 in that the dehydration apparatus 3 is further provided with the compressor 16. The vaporized DME 38, which has been vaporized and extracted in the concentrator 13, and the vaporized DME 42, which has been separated by the evaporation of evaporator 15, are supplied to compressor 16, and liqid DME is reproduced. The reproduced liquid DME 44 is supplied again to the contact tank 11. In this dehydration apparatus 3, both the gas 38(mainly vaporized DME) separated in the concentrator 13 and the vaporized DME 42 separated in the evaporator 15 are supplied to the compressor 16, or either one may be supplied. In the dehydration apparatus 3, both the liquid DME 32 from the liquid DME supply unit 31 and the reproduced liquid DME 44 are supplied to the contact tank 11, or only the liquid DME 44 may be supplied to the contact tank 11.

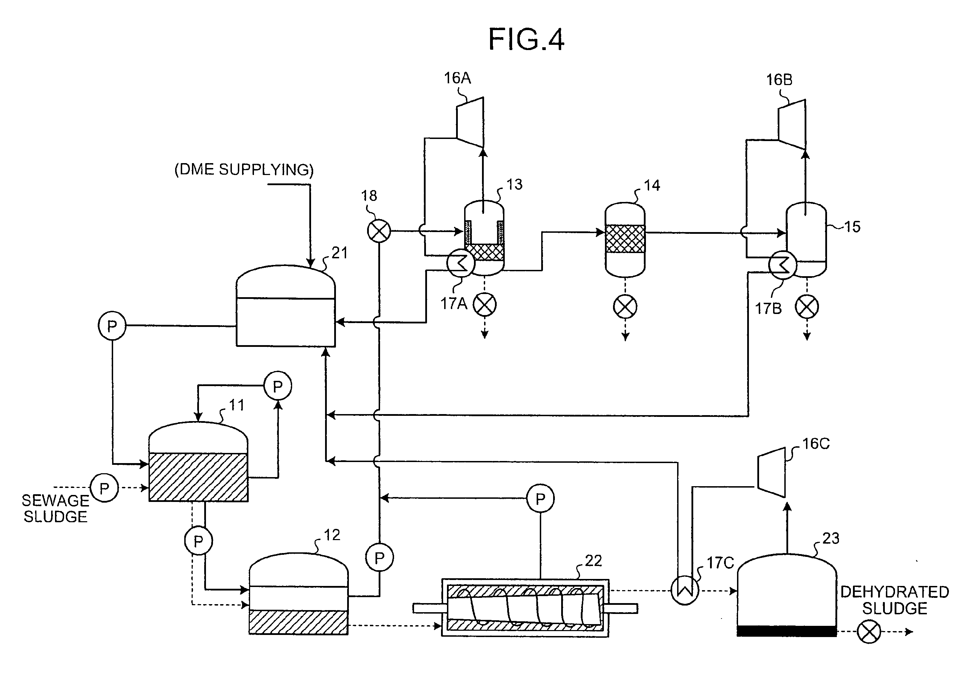

An outline of the component of the treatment apparatus of the present invention is shown in FIG. 4.
In this example, the case is assumed where the sewage sludge is an object for dehydration and dimethyl ether is used as the substance that is in the gaseous state under normal temperature and pressure conditions, but the system of the present invention is not limited thereto. As in the aforementioned (A), dimethyl ether has the boiling point of about -25°C at 1 atmosphere and is in the gaseous state at 0°C to 50°C at atmospheric pressures. Thus, it is necessary to operate under the pressurization condition in order to obtain dimethyl ether in the liquid state (liqid of dimethyl ether) at normal temperature.

In the treatment apparatus shown in FIG. 4, the contact tank 11, the solid-liquid separation tank 12, the concentrator 13, the liquid-liquid separator 14 and the evaporator 15 are linked in this order with piping. Among them, the compressors 16A, 16B and the heat exchangers 17A, 17B are connected to the concentrator 13 and the evaporator 15, respectively. Further, the buffer tank 21 for supplying dimethyl ether is connected to the contact tank 11. The concentrator 13 and the evaporator 15 are connected to the buffer tank 21. A circulating path is formed in the system as a whole. The squeezing machine 22 and the dimethyl ether-removing machine 23 are connected to the solid-liquid separation tank 12 in this order. The compressor 16C and the heat exchanger 17C are connected to the dimethyl ether-removing machine 23. A tube between the solid-liquid separation tank 12 and the concentrator 13 is provided with the pressure reducing valve 18.

In the treatment apparatus in FIG. 4, dimethyl ether circulates with changing its state of the gas and the liquid and repeats the separation from or the contact with the sewage sludge. In FIG. 4, lines with an arrow indicate a piping which supplies DME, and arrows indicate directions for which the dimethyl ether, the sewage sludge or the mixture of the dimethyl ether and the sewage sludge runs.

A route where the sewage sludge runs in the apparatus in FIG. 4 is explained as follows. The sewage sludge is filled in the contact tank 11, and brought into contact with the liquid dimethyl ether, subsequently separated into the liquid layer and the solid layer in the solid-liquid separation tank 12. Then, the liquid layer is sent to the concentrator 13 and the solid layer is discharged. The liquid layer is vaporized and extracted in the concentrator 13, and subsequently the liquid is sent to the liquid-liquid separator 14. The upper layer obtained in the liquid-liquid separator 14 is sent to the evaporator 15, and the lower layer is discharged as the discharge water from the valve at the bottom of liquid-liquid separator 14. The upper layer is further vaporized and extracted in the evaporator 15, and the liquid layer is discharged as the discharge water from the valve in bottom of the evaporator 15. The solid layer separated in the solid-liquid separation tank 12 is discharged from the valve in the bottom of the solid-liquid separation tank 12 (not shown in the Figure). The discharged solid layer, if necessary, may be supplied to and squeezed in the squeezing machine 22, and subsequently may be supplied to the dimethyl ether-removing machine 23 via the heat exchanger 17C. In the dimethyl ether-removing machine 23, DME left in the solid layer may be discharged as vaporized DME, and the dehydrated sludge scarcely containing DME may be discharged. The vaporized DME discharged from the dimethyl ether-removing machine 23 may be supplied to and liquefied in compressor 16C, subsequently returned to the buffer tank 21 via the heat exchanger 17C, and utilized again for the dehydration.

The route where dimethyl ether runs in FIG. 4 is explained as follows. A supercooled liquid of the liquid dimethyl ether is collected in the buffer tank 21, subsequently supplied to the contact tank 11 to be brought into contact with the sewage sludge, and then sent to the solid-liquid separation tank 12 and the concentrator 13 in this order. The liquid dimethyl ether is vaporized and evaporated to the gas of the dimethyl ether in the concentrator 13, which is then pressurized in the compressors 16A, 16B and 16C to become a superheated gas, which is then cooled in the heat exchangers 17A, 17B and 17C to become the super-cooled liquid, which is then returned to the buffer tank 21.

### EXAMPLES

### Reference Example 1

The column (hyper glass cylinder HPG10-5 model, made of glass, internal diameter: 11 mm, supplied from Taiatsu Techno Corporation) was filled with 5.0 g of sewage sludge (dehydrated cake, water content: 78% by weight). The volume of the sludge filled in the column was about 4.5 mL (diameter: 11 mm, thickness: 43 mm), and its density was 1.11 g/mL. The column has the full length of 190 mm and the external diameter of the narrowing column mouth of 12.5 mm, and glass beads were densely filled into both back and forth of the column filled with the sewage. Both ends of the column in which the sewage sludge had been filled were provided with pressure gauges, and liquid DME was supplied with 0.42 MPaG from the bottom of the column at the normal temperature.

The pressure at both ends of the column was measured, and the pressure at the downstream side of liquid DME was 0.0 MPaG whereas the pressure at the upstream side was 0.42 MPaG (nearly saturated vapor pressure). Infiltration of the liquid DME into the sewage sludge layer was observed for one hour from the start of supplying the liquid DMA, but the liquid DME did not infiltrate into the sewage sludge layer at all. From this result, it has been demonstrated that some operation is needed for contacting the sewage sludge with the liquid DME efficiently.

### Reference Example 2

Three containers having the internal volume of 96 mL were prepared, and 5.0g, 1.0 g and 0.1 g of the sewage sludge (dehydrated cake, water content: 78% by weight) and 30 mL to 35 mL (=20.0 g to 23.3 g) of liquid DME were loaded therein. Contents in each container were stirred using the stirring bar (rotation frequency 600 rpm to 700 rpm), and the state in the container was grossly observed with time.

In the container in which 5.0 g of the sewage sludge had been loaded, the volume of the sludge swelled to about 38 mL immediately after the liquid DME was added to the container. The volume of the sludge was gradually decreased by stirring, and decreased to about 29 mL one minute after the start of stirring. Subsequently, the stirring was continued for one hour, but the volume of the sewage sludge was not changed.

In the container in which 1.0 g of the sewage sludge had been loaded, the liquid DME was added to the container and the stirring was started. After about 5 minutes, the liquid DME began to disperse in the sewage sludge and dispersed uniformly after 30 minutes. After stirring for one hour, the mixture was left stand to precipitate the sludge. The boundary between the liquid DME and the sewage sludge was not clear 5 seconds after the start of precipitation, but after 11 seconds the boundary interface between the liquid DME and the sewage sludge appeared around 18 mL and the separation of the liquid DME and the sewage sludge was confirmed. A sedimentation rate of the sewage sludge was about 2.0 mm/s because the liquid surface level of the sewage sludge was reduced from about 30 mL to about 18 mL for the 11 seconds.

When the amount of water in the sewage sludge before the dehydration was supposed to be 78% by weight, the amount of the dry sewage sludge used in this test was calculated to be 0.22 g. Meanwhile, the apparent volume of the sewage sludge precipitated after the treatment was about 18 mL and its apparent weight was about 12 g. Here, supposing that this sewage sludge contains low amount of the aqueous component and the sewage sludge in form of gel and solid and was mostly occupied with the liquid DME, it was estimated from the above result that the sludge concentration in the precipitated sewage sludge was 0.22/12=1.8% by weight and the liquid DME occupied the remaining 98.2% by weight.

Further, in the container in which 0.1 g of the sewage sludge had been loaded, even when the liquid DME was added and the mixture was stirred for 10 minutes, the liquid DME only passed through the sewage sludge and it was not able to be confirmed that the sewage sludge was dispersed in the liquid DME.
From the result in this Example, it has been found that it was necessary to adjust the ratio of sewage sludge to be combined to liquid DME in order to disperse the sewage sludge in the liquid DME.

### Example 1

In a "container 1" (made of glass) having the internal volume of 96 mL, 2.15 g of sewage sludge (dehydrated cake, water content: 78% by weight) and 35.0 mL (=23.3 g) of liquid DME was loaded and stirred for 5 minutes (rotation frequency 600 rpm to 700 rpm).
After stirring for 5 minutes, the mixture was left stand for 10 seconds or more to precipitate the sludge, and subsequently 15.76 g of the supernatant of the liquid DME in the "container 1" was aspirated out and transferred to the "container 2".

After the liquid DME in the "container 2" was evaporated under the normal temperature and pressure conditions, and then the resultant was separated by liquid-liquid separation into the DME layer (upper layer) and the water layer (lower layer). The amount of the evaporated DME was 13.00 g. Subsequently, the water layer (lower layer) was aspirated out and transferred to the "container 3". The amount of the water layer transferred to the container 3(lower layer) was 0.87 g.

The DME-rich liquid left in the "container 2" and the water-rich liquid in the "container 3" were evaporated respectively under reduced pressure, and the weight of the water and the grease left in each container was measured. As this result, the amount of the aqueous component left in the "container 2" was 0.424 g, and the amount of the grease therein was 0.023 g (concentration: 5.15% by weight). The amount of the evaporated DME in the "container 2" was 2.34 g. Meanwhile, the amount of the aqueous component left in the "container 3" was 0.419 g, and in the aqueous component, the amount of the solid and gel components other than the liquid component which were derived from the sludge (hereinafter referred to as the grease) was 0.006 g (concentration: 1.41%). The amount of the evaporated DME in the "container 3" was 0.45 g.
Subsequently, the aqueous component was evaporated by heating at 100°C, and the amount of the contained products such as the grease was measured.

In the "container 1", it was confirmed that the liquid DME and the sewage sludge were mixed almost uniformly by stirring for 5 minutes, and the sewage sludge was dispersed in the liquid DME. Even when stirred for 5 minutes or more, the dispersed state was the same as that obtained by stirring for 5 minutes.
When the amount of evaporated DME in the "container 2" was 12.00 g, the DME phase containing the grease was abundantly left in the "container 2", and the grease concentration in the aqueous phase was increased after evaporating the remained DME. Conversely, when the evaporation amount was 14.00 g, the DME phase was decreased, the grease concentration became too high and the aqueous phase was contaminated.

## Claims

1. A method for treatment of a water-containing material comprising:
(A) a step bringing a liquid of a substance that is in the gaseous state under normal temperature and pressure conditions into contact with a water-containing material;
(B) a step obtaining a liquid layer through solid-liquid separation from a treated product resulting from the step (A);
(C) a step vaporizing and extracting at least a portion of the substance that is in the gaseous state under normal temperature and pressure conditions as a gas from the liquid layer obtained from the step (B); and
(D) a step collecting a lower layer resulting from liquid-liquid separation conducting on a liquid layer resulting from the step (C).

2. The method for treatment according to claim 1, wherein the substance that is in the gaseous state under normal temperature and pressure conditions is a substance that is in the gaseous state at 25°C at 1 atmosphere.

3. The method for treatment according to claim 1, wherein the substance that is in a gaseous state under normal temperature and pressure conditions is one or a mixture of two more selected from dimethyl ether, ethylmethyl ether, formaldehyde, ketene, acetaldehyde, butane and propane.

4. The method for treatment according to claim 1, further comprising: (E) a step vaporizing and extracting at least a portion of the substance that is in the gaseous state under normal temperature and pressure conditions as a gas from an upper layer resulting from the step (D).

5. The method for treatment according to claim 1, further comprising: (F) a step recovering a gas of the substance that is in the gaseous state under normal temperature and pressure conditions resulting from the step (C) of vaporizing and separating, and liquefying the gas to yield a liquefied substance.

6. The method for treatment according to claim 4, further comprising: (F') a step recovering a gas of the substance that is in the gaseous state under normal temperature and pressure conditions resulting from the step (c) and/or the step (E) of vaporizing and separating, and liquefying the gas to yield a liquefied substance.

7. The method for treatment according to claim 1, in the step (A), wherein the liquid of the substance that is in the gaseous state under normal temperature and pressure conditions is brought into contact with the water-containing material at a weight ratio of 233:1 to 233:50.

8. The method for treatment according to claim 1, wherein stirring is performed at 400 rpm to 1,000 rpm in the step (A).

9. A apparatus for treatment of a water-containing material, comprising:
a contact tank that brings a liquid that is a substance that is in the gaseous state under normal temperature and pressure conditions into contact with a water-containing material;
a solid-liquid separation tank that conducts solid-liquid separation to a mixture resulting from bringing the liquid of the substance into contact with the water-containing material in the contact tank;
a concentrator that extracts at least a portion of the substance that is in the gaseous state under normal temperature and pressure conditions from a liquid layer resulting from the separation as a gas; and
a liquid-liquid separator that conducts liquid-liquid separation on a liquid layer resulting from the solid-liquid separation.

10. The apparatus for treatment according to claim 9, further comprising: an evaporator that extracts at least a portion of the substance that is in the gaseous state under normal temperature and pressure conditions from a separated liquid layer in the liquid-liquid separator as a gas.

11. The apparatus for treatment according to claim 9 or 10, further comprising: a compressor that pressurizes a gas of the substance that is in the gaseous state under normal temperature and pressure conditions.
